Europäisches Patentamt

European Patent Office

Office européen des brevets

(11) Veröffentlichungsnummer: **0 047 036**

**A2**

(19)

(12) **EUROPÄISCHE PATENTANMELDUNG**

(21) Anmeldenummer: 81200939.7

(22) Anmeldetag: 26.08.81

(51) Int. Cl.³: **G 01 R 29/08**

(30) Priorität: 28.08.80 DE 3032426

(43) Veröffentlichungstag der Anmeldung:
10.03.82 Patentblatt 82/10

(84) Benannte Vertragsstaaten:
DE FR GB SE

(71) Anmelder: Philips Patentverwaltung GmbH
Steindamm 94
D-2000 Hamburg 1(DE)

(84) Benannte Vertragsstaaten:
DE

(71) Anmelder: N.V. Philips' Gloeilampenfabrieken
Pieter Zeemanstraat 6
NL-5621 CT Eindhoven(NL)

(84) Benannte Vertragsstaaten:
FR GB SE

(72) Erfinder: Lüdeke, Kai-Michael
Steinburger Strasse 19
D-2000 Hamburg 54(DE)

(74) Vertreter: Hartmann, Heinrich, Dipl.-Ing. et al,
Philips Patentverwaltung GmbH Steindamm 94
D-2000 Hamburg 1(DE)

(54) **Verfahren und Anordnung zur radiometrischen Messung der Rauschtemperatur von Ein-Toren im Hochfrequenz- und Mikrowellenbereich.**

(57) Verfahren zur radiometrischen Messung der Rauschtemperatur von Ein-Toren im Hochfrequenz- und Mikrowellenbereich, wobei ein einer Rauschquelle entnommenes Signal über je einen Abschwächer einmal direkt und einmal über einen Richtkoppler nach Reflektion an einem Meßobjekt auf einen Umschalter gelangt und von diesem dem Eingang eines Empfängers zugeführt wird. Die Erfindung besteht darin, daß das Rauschsignal derart moduliert wird, daß aus dem dem Empfänger entnommenen Ausgangssignal drei Teilsignale abgeleitet werden, deren erstes der scheinbaren Objekttemperatur, deren zweites der Objektemissivität und deren drittes einem objektunabhängigen Testsignal (Systemverstärkung) entspricht, daß das Testsignal zur Beseitigung der Verstärkungsabhängigkeit der beiden ersten Größen verwendet wird, und daß mittels Division der scheinbaren Objekttemperatur durch die Objektemissivität die wahre Objekttemperatur bestimmt wird.

FIG.1

"Verfahren und Anordnung zur radiometrischen Messung
der Rauschtemperatur von Ein-Toren im Hochfrequenz-
und Mikrowellenbereich"

Die Erfindung betrifft ein Verfahren zur radiometrischen
Messung der Rauschtemperatur von Ein-Toren im Hochfrequenz- und Mikrowellenbereich, sowie eine Anordnung
zur Durchführung dieses Verfahrens. Insbesondere kann
es sich bei dem Ein-Tor um eine zum Zweck der radiometrischen biomedizinischen oder industriellen Temperaturmessung auf ein Objekt gerichtete Antenne handeln.

Verfahren zur Messung von Rauschtemperaturen oder scheinbaren Objekttemperaturen anhand der ausgesandten elektromagnetischen thermischen Strahlung sind an sich bekannt
(z.B. [1] - [4] ).

Bei Messungen mit herkömmlichen Radiometern an beliebigen
Ein-Toren tritt im allgemeinen das Problem auf, daß
deren Impedanz von der Eingangs-Impedanz des Meßsystems
abweicht. Diese Fehlanpassung führt dazu, daß die direkt
gemessene Rauschtemperatur um einen bestimmten Faktor,
die sogenannte Emissivität, kleiner ist, als es der
im Anpassungsfall verfügbaren Rauschleistung entspricht,
bzw. kleiner als die tatsächlichen Objekttemperaturen.

Die Ursachen dieser Fehlanpassung speziell für den Fall
der medizinischen Temperaturmessung mit Kontaktantennen
und ihr Einfluß auf die Meßgenauigkeit sind z.B. in der
DE-OS 28 03 480 und weiteren Veröffentlichungen
( [5] - [7] ) näher beschrieben. Dort sind ein Verfahren und eine Anordnung angegeben, die durch Herstellung von Strahlungsgleichgewicht am Ein-Tor (bzw.
an der Grenze zwischen Antenne und Objekt) den durch
Fehlanpassung in herkömmlichen Radiometern herbeigeführten Meßfehler vermeiden, wobei jedoch der Meßbereich zu tiefen Temperaturen und die Meßgenauigkeit für gleichzeitige Emissivitätsmessung Beschränkungen unterliegen:

1. Die zur Herstellung des Strahlungsgleichgewichtes vorgesehenen elektronisch steuerbaren Rauschquellen haben stets eine Minimal-Temperatur, bei ungekühlten Systemen in der Regel die Umgebungstemperatur. Eine Messung bei tieferen Temperaturen ist nicht möglich.

2. Die Grenzen der Steuerkennlinie der Rauschquelle legen den Temperaturmeßbereich fest. Die zur gleichzeitigen Emissivitätsmessung erforderliche Modulation der Rauschquelle um den jeweiligen Temperaturwert ist naturgemäß nur mit geringem Hub möglich. Um eine mit der Temperaturmessung vergleichbare Auflösung (in Prozent des Meßbereiches) zu erzielen, ist deshalb mit entsprechend längeren Integrationszeiten zu arbeiten.

Aufgabe der vorliegen Erfindung ist es daher, unter Beibehaltung der fehlanpassungsunabhängigen Messung der tatsächlichen Objekttemperatur den Temperaturmeßbereich zu tieferen Temperaturen zu erweitern, wobei sich außerdem noch der Vorteil ergibt, daß die Meßauflösung und die Meßgenauigkeit der gleichzeitigen Emissivitätsmessung bei gleicher Integrationszeit um eine Größenordnung verbessert werden.

Das erfindungsgemäße Verfahren geht aus vom klassischen Dicke-Radiometer [3] und Hach's Zwei-Referenz-Radiometer ([4]). Ausgehend von dem bekannten Zusammenhang zwischen scheinbarer ($\Delta T_s$) und tatsächlicher ($\Delta T_o$) Objekttemperatur

$$\Delta T_s = E \cdot \Delta T_o$$

($\Delta T$: Temperaturdifferenz bezogen auf einen geeignet gewählten Referenzwert $T_{NO}$)

nutzt die Erfindung die Erkenntnis, daß zwischen der

Emissivität E und der Reflektivität R an reziproken Ein-
Toren der einfache Zusammenhang E = 1 - R besteht.

Das erfindungsgemäße Verfahren besteht darin, daß das
Rauschsignal derart moduliert wird, daß aus dem dem Empfänger
entnommenen Ausgangssignal drei Teilsignale abgeleitet
werden, deren erstes der scheinbaren Objekttemperatur,
deren zweites der Objektemissivität und deren drittes
einem objektunabhängigen Testsignal (Systemverstärkung)
entspricht, daß das Testsignal zur Beseitigung der Verstärkungsabhängigkeit der beiden ersten Größen verwendet
wird, und daß mittels Division der scheinbaren Objekttemperatur durch die Objektemissivität die wahre Objekttemperatur bestimmt wird. Zweckmäßige Ausgestaltungen dieses
Verfahrens ergeben sich aus den Unteransprüchen.

Die entsprechenden Meßsignale sind am Ausgang des im
System enthaltenen Hochfrequenz-(Mikrowellen-)Empfängers
mit einem Proportionalitätsfaktor K behaftet, der von
Empfängerverstärkung, -bandbreite, Detektorempfindlichkeit,
usw. abhängt  und ohne weitere Stabilisierungsmaßnahmen
gewissen Schwankungen unterliegt. Soll bei einem vereinfachten Verfahren die Emissivität nicht für sich ausgewertet werden, so genügt es, die scheinbare relative Temperatur durch die gemessene unnormierte Emissivität zu
dividieren, damit der in beiden Größen gleichermaßen enthaltene Faktor K herausfällt. Soll die in der Reflektivität
R bzw. der Emissivität E enthaltene Information über das
Meßobjekt genutzt werden, so ist der Proportionalitätsfaktor K zu stabilisieren. Hierzu dient ein drittes, meßobjektunabhängiges Testsignal, das den gleichen Signalweg
durchläuft, daher auch den Faktor K enthält. Division der
beiden Meßsignale durch das Testsignal beseitigt die K-
Abhängigkeit. Die gleiche Wirkung wird erreicht mit einer
automatischen Verstärkungsregelung im Empfänger, die den
Ausgangspegel des Testsignals konstant hält. Diese Stabilisierungsmethode ist für Radiometer zur Messung der scheinbaren Temperatur $\Delta T_s$ an sich bekannt (Lit.: [4] ).

Eine besonders zweckmäßige Art des vorgeschlagenen Verfahrens besteht darin, daß das Meßsignal zur Bestimmung der Emissivität bzw. der Reflektivität einer quasithermischen Rauschquelle entnommen wird und durch Modulation der Rauschquelle die gleichzeitige Messung der Teilsignale (scheinbare relative Temperatur, Reflektivität, Testsignal) erfolgt.

Nur durch die Verwendung einer quasithermischen Rauschquelle zur Erzeugung des Meßsignals und des Testsignals ergibt sich der Vorteil, daß beide Signale den gleichen Parameterstreuungen des Meßempfängers wie das Temperatursignal unterliegen. Auch kann die Division kontinuierlich in Echtzeit durchgeführt werden.

Vorzugsweise besteht die Modulation aus einer Taktfunktion, die lediglich ein Ein-Aus-Schalten der Rauschquelle bewirkt. Auf diese Weise wird eine wesentliche Vereinfachung der Steuerelektronik bei elektronischen Rauschquellen (z.B. Avalanche-Dioden) erreicht und das bei quasianaloger Steuerung durch Pulsfrequenzmodulation entstehende Problem einer pegelabhängigen spektralen Verteilung ihrer Rauschleistung vermieden. Andererseits bleibt so die Möglichkeit der Verwendung einer Umschaltvorrichtung mit echten thermischen Strahlern (Abschlußwiderstände verschiedener Temperatur) als Rauschquelle gegeben.

Die Modulationsfunktion F der Rauschquelle und die Taktfunktion C des Dicke-Schalters bestimmen die Verteilung der drei Teilsignale auf das Signalspektrum am Empfängerausgang. Um eine einfache Trennung der Teilsignale in drei Synchron-Detektoren zu ermöglichen, finden vorzugsweise folgende Modulationsfunktionen F Verwendung, wobei folgende Abkürzungen verwendet sind:

$S_G$ Testsignal, $S_R$ Reflektivitätssignal oder $S_E$ Emissivitätssignal (im abgeglichenen Zustand, vgl. unten), $S_{TN}$ Temperatursignal.

Der Dicke-Schalter wird üblicherweise mit einem Tastverhältnis 1 : 1 zwischen beiden Eingängen umgeschaltet. Dem Zustand, in dem der Eingang des Meßsystems mit dem Empfänger verbunden ist, wird $C = 1$ zugeordnet. Die Modulationsfunktion F wird in einer Digitalschaltung flankensynchron aus der Taktfunktion C abgeleitet, derart, daß

1a) während 8 aufeinanderfolgender Halbperioden von C:10101010 die Funktion F die Zustände 11011000 oder 00100111 annimmt, und

1b) die gleiche Zuordnung für das Inverse von C (01...) gilt.

Dabei ist $F = 1$ der eingeschalteten Rauschquelle zugeordnet. Auf diese Weise wird erreicht, daß die drei Teilsignale $S_G, S_R, S_{TN}$ getrennt auf den Frequenzen $f_o$, $2f_o$, $4f_o$ und deren ungeraden Harmonischen erscheinen. Im Fall 1b) sind $S_G$ und $S_R$ vertauscht. $4f_o$ ist dabei die Frequenz, mit der der Dicke-Schalter betätigt wird.

2. Die Modulationsfunktion F wird durch flankengetriggerte Frequenzhalbierung aus der Taktfunktion C gewonnen. Auf diese Weise wird erreicht, daß die Teilsignale $S_G$ und $S_R$ in Quadratur auf $2f_o$ erscheinen, $S_{TN}$ wieder auf $4f_o$.

3. Die Modulationsfunktion F wird mit doppelter Frequenz (Tastverhältnis 1 : 1) flankensynchron zur Taktfunktion C geschaltet. $S_E$ (bei abgeglichener Meßbrücke) und $S_{TN}$ erscheinen in Phasenquadratur auf $4f_o$ (und ungeraden Harmonischen).

In allen Fällen werden die Steuerfunktionen der Synchron-Detektoren in einfacher Weise zweckmäßig durch Frequenzteiler und logische Gatter aus einer Taktfunktion mit der Frequenz $8f_0$ abgeleitet. Zur Einstellung der richtigen Phasenlage zur Demodulation sind, dem Stand der Technik entsprechend, Verzögerungsschaltungen vorzusehen.

Eine Anordnung zur Durchführung des erfindungsgemäßen Verfahrens unterscheidet sich von der bekannten Anordnung nach der DE-OS 28 03 480 dadurch, daß dem Rauschgenerator ein Steuergenerator vorgeschaltet ist, dessen erster Ausgang sowohl mit dem Schalter als auch mit dem Steuereingang eines ersten Synchron-Detektors verbunden ist, dessen zweiter Ausgang mit dem Steuereingang eines zweiten Synchron-Detektors verbunden ist, und dessen dritter Ausgang mit dem Steuereingang eines dritten Synchron-Detektors verbunden ist, und daß die Signaleingänge der Synchron-Detektoren am Ausgang des Empfängers liegen. Zweckmäßige Ausgestaltungen ergeben sich aus den Unteransprüchen.

Anhand der Zeichnung werden Ausführungsbeispiele der Erfindung näher beschrieben. Darin zeigen

Fig. 1 eine mögliche Anordnung zur Durchführung des vorgeschlagenen Verfahrens,

Fig. 2 eine vereinfachte Variante der Anordnung der Eingangsbauteile,

Fig. 3 eine mögliche Anordnung zur Weiterverarbeitung der von der Anordnung nach Fig. 1 ausgegebenen Signale,

Fig. 4 eine mögliche Teilanordnung zur Durchführung der Systemstabilisierung mittels Dividierer,

Fig. 5 eine mögliche Teilanordnung zur Durchführung der Systemstabilisierung mittels steuerbarem Verstärker und Regler,

Fig. 6 ein Beispiel einer Ergänzung zur Eliminierung von Meßfehlern aufgrund von Temperaturabweichungen innerhalb der Meßbrücke,

Fig. 7 eine weitere mögliche Anordnung zur Durchführung des Verfahrens, enthaltend die Teilanordnungen nach Fig. 1, 3, 4, und

Fig. 8 eine mögliche Ausbildung der Steuersignale F, C, B, A für Rauschquelle, Dicke-Schalter und die drei Synchron-Detektoren.

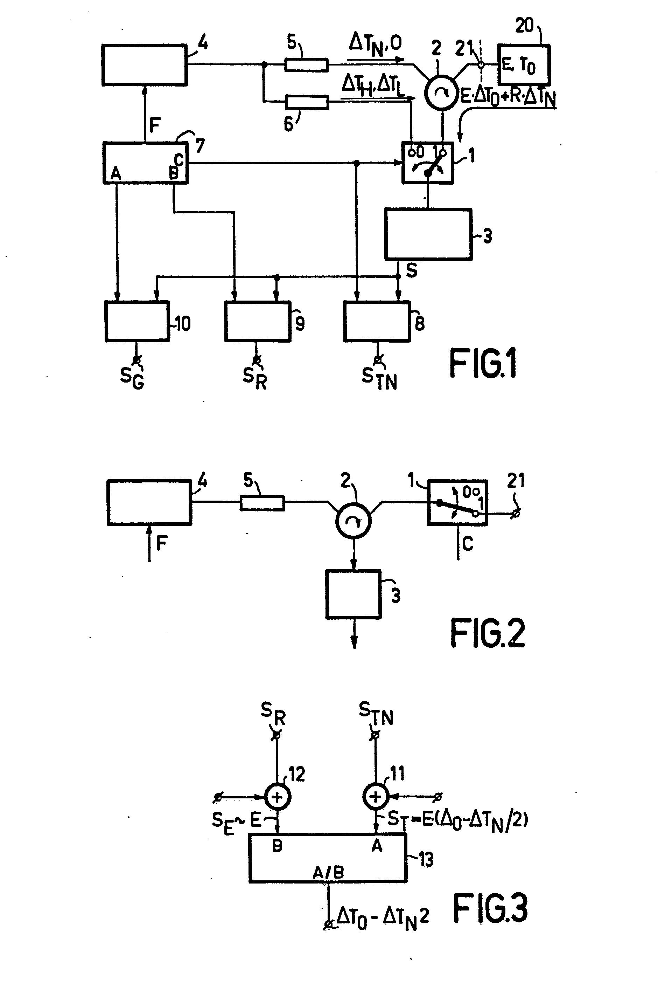

Die Anordnung nach Fig. 1 enthält einen Dicke-Schalter 1, dessen eine Eingangsklemme mit einem Richtkoppler 2 und dessen Ausgangsklemme mit dem Eingang eines Mikrowellenempfängers 3 verbunden sind. Eine Rauschquelle 4 ist über zwei Abschwächer 5 und 6 sowohl mit einem weiteren Anschluß des Richtkopplers 2 als auch mit einem zweiten Eingang des Dicke-Schalters 1 verbunden. Ein Steuergenerator 7 steuert den Dicke-Schalter 1 und die Rauschquelle 4. Zugleich ist er mit Eingängen dreier SynchronDetektoren 8,9,10 verbunden, denen die Signale $S_{TN}$, $S_R$ und $S_G$ entnehmbar sind. Ein Meßobjekt 20 liegt mit seiner Eingangsklemme 21 ebenfalls am Richtkoppler 2.

Bei dieser Anordnung gelangt das Ausgangssignal der Rauschquelle 4 über den Abschwächer 5 und den Richtkoppler 2 an die Eingangsklemme 21 des Meßobjektes 20. Das Ausgangssignal des Meßobjektes 20 und das an ihm reflektierte Signal der Rauschquelle 4 gelangen über den Richtkoppler 2 an die Eingangsklemme des Dicke-Schalters 1, dessen zweite Eingangsklemme über den Abschwächer 6 mit der Rauschquelle 4 verbunden ist. Der Ausgang des Dicke-Schalters 1 ist mit dem Eingang eines Mikrowellenempfängers 3 verbunden, dessen Ausgangssignal/den drei Synchron-Detektoren 8,9,10 zugeführt wird. Der Steuergenerator 7 versorgt die Rauschquelle 4, den Dicke-Schalter 1 und die Synchron-Detektoren 8,9,10 mit den erforderlichen Steuersignalen.

Im Fall der oben unter 2) genannten Art zur Herstellung der Modulationsfunktion F kann bei aus Dicke-Schalter 1, Richtkoppler 2 und den Abschwächern 5,6 bestehender und bezüglich des Rauschsignals abgeglichener Meßbrücke durch Einstellung des Synchron-Detektors 9 für das Signal $S_R$ auf $45^O$ Phasenlage relativ zum Synchron-Detektor 10 für das Signal $S_G$ auch direkt die unnormierte Emissivität entnommen werden. Dies ist auch bei nicht abgeglichener Meßbrücke möglich, die erforderliche Phasenlage weicht dann jedoch von $45^O$ ab.

Die Meßbrücke gilt als abgeglichen, wenn bei abgeklemmtem Meßobjekt das Signal $S_T$ gleich Null ist.

Soll das Signal $S_R$ bzw, wenn entsprechend abgeglichen, das Signal $S_E$ nicht für sich ausgewertet werden, sondern nur zur Korrektur des Signals $S_T$ dienen, können der dritte Synchron-Detektor 10 für das Signal $S_G$ und eventuelle Vorrichtungen zur Systemstabilisierung entfallen.

Bei geringeren Anforderungen an die Meßgenauigkeit kann die Anordnung von Abschwächern, Richtkoppler und Dicke-Schalter gemäß Fig.2 vereinfacht werden. Der Abschwächer 6 entfällt, statt eines Umschalters genügt ein EIN/AUS-Schalter zwischen der Eingangsklemme 21 und dem Richtkoppler 2.

Die Anordnung nach Fig.3 übernimmt die von den Synchron-Detektoren 8,9 nach Fig.1 erzeugten Signale $S_R$ und $S_{TN}$, erzeugt in Summierschaltungen 11,12 mittels weiter unten beschriebener Offsetsignale $S_E=E$ und $S_T=E\cdot(\Delta T_o - \Delta T_N/2)$, die

einem Dividierer 13 zugeführt werden, der $S_T/S_E$ berechnet, so daß seinem Ausgang die Größe $\Delta T_o - \Delta T_N/2$, entnehmbar ist ( $\Delta T_N/2$ ist eine bekannte Systemkonstante).

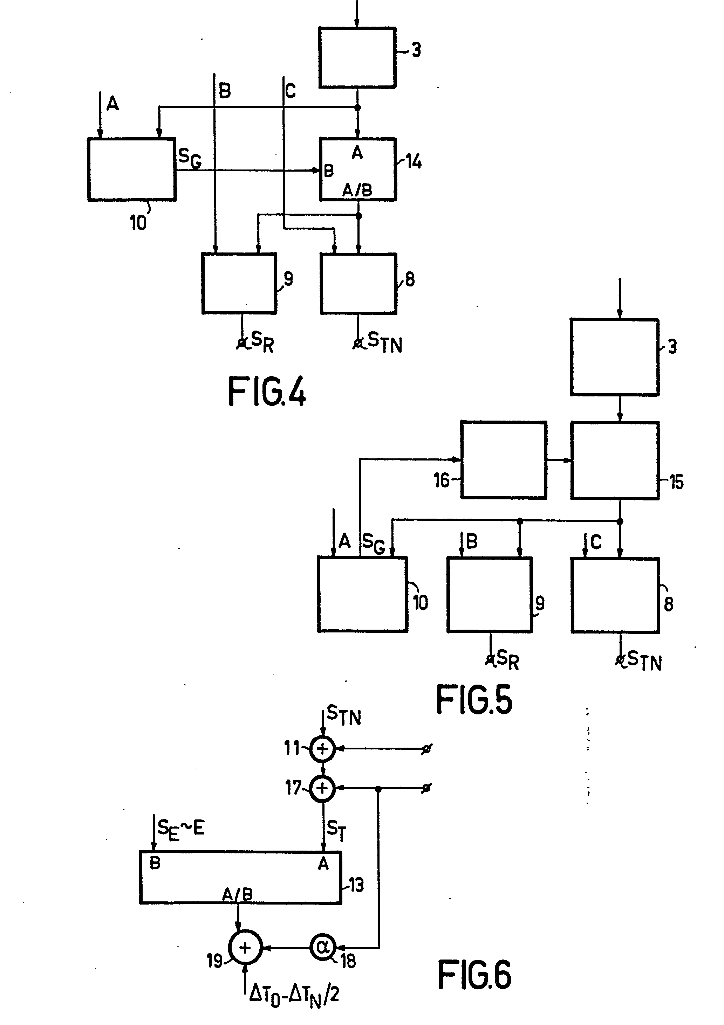

Fig.4 zeigt eine mögliche Anordnung zur Stabilisierung mittels eines Dividierers 14, der zwischen dem Ausgang des Empfängers 3 und den Eingängen der Synchron-Detektoren 8 und 9 eingefügt ist; der Divisor-Eingang ist mit dem Ausgang des Synchron-Detektors 10 verbunden.

Nach Fig.5 wird die Stabilisierung mit einem steuerbaren Verstärker 15 bewirkt, der zwischen den Ausgang des Empfängers 3 und die Eingänge der Synchron-Detektoren 8,9 und 10 geschaltet ist und von einem mit dem Ausgang des Synchron-Detektors 10 verbundenen Regler 16 derart gesteuert wird, daß das Signal $S_G$ konstant bleibt.

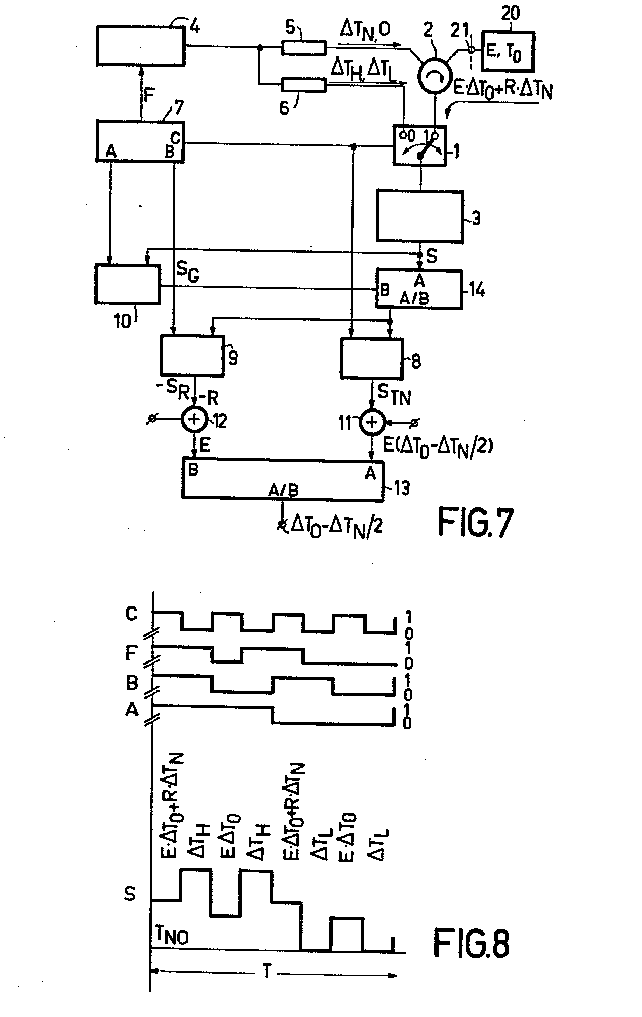

Anhand des in Fig.7 dargestellten Ausführungsbeispieles einer weiteren erfindungsgemäßen Anordnung werden Funktionsweise und Teilsignale näher beschrieben.

Die Rauschquelle 4 wird mit der Taktfunktion F (siehe Fig.8) aktiviert. Ihr Ausgangssignal wird von den beiden Abschwächern 5,6 aufgeteilt und soweit herabgesetzt, daß der Differenzpegel $\Delta T_N$ zwischen EIN- und AUS-Zustand als Rauschtemperatur ausgedrückt, von der Größenordnung des zu verarbeitenden Meßbereiches ist. An den Eingang 21 des Meßsystems sei ein Meßobjekt 20 mit der Temperatur $T_o$ und der Emissivität E angeschlossen. Für die acht Teilabschnitte der Periode der Funktion F können nun die Ausgangspegel des Empfängers angegeben werden (Fig.8). Zur Vereinfachung seien hier jedoch die entsprechenden Temperaturen, bezogen auf die Eingangsklemmen der Anordnung, mitgeteilt. Das Rauschsignal wird hierzu beschrieben durch a) einen Bezugspegel $T_{NO}$, der bei ausgeschalteter Rauschquelle an den Eingangsklemmen wirksam ist, b) durch den entsprechenden Zusatzpegel $\Delta T_N$ bei eingeschalteter Rauschquelle 4, c) durch die entsprechenden Differenzpegel $\Delta T_H$ (Rauschquelle eingeschaltet) und $\Delta T_L$ für das Signal am Referenzeingang des Dicke-Schalters 1. Das Diagramm nach Fig.8 zeigt anhand eines angenommenen Beispieles die entsprechenden Signalpegel der acht Teilabschnitte. Die drei Synchron-Detektoren 8,9,10 (Schalt-Demodulatoren) werden mit den Funktionen A,B,C derart gesteuert, daß sich die drei Ausgangssignale wie folgt ergeben:

$$S_G = ( \Delta T_H - \Delta T_L) \cdot K \qquad S_R = K \cdot R \cdot \Delta T_N$$

$$S_{TN} = K \cdot \left\{ E \cdot (T_o - T_{NO} - \Delta T_N/2) + \Delta T_N/2 - \Delta T_H/2 - \Delta T_L/2 \right\}.$$

K ist der eingangs genannte Proportionalitätsfaktor.

$\Delta T_H$, $\Delta T_L$, $\Delta T_N$, $T_{NO}$ sind Konstanten des Meßsystems. In der Dividierschaltung 14 werden die Signale $S_R$ und $S_{TN}$ durch Division durch das Signal $S_G$ von der K-Abhängigkeit befreit. Der konstante Faktor $1/(\Delta T_H - \Delta T_L)$ wird in einen im folgenden nicht weiter aufgeführten Eichfaktor übernommen. In den Summierschaltungen 11,12 werden durch Offset-Signale die Signale $S_E$ und $S_T$ erzeugt:

$$S_E = E \cdot 1 - R \qquad S_T = E \cdot (T_o - T_{NO} - \Delta T_N/2)$$

Die beiden Offset-Signale bestimmen sich durch die Forderung, daß bei offenen oder kurzgeschlossenen Eingangsklemmen des Meßsystems die Ausgangssignale der Summierschaltungen, $S_E$ und $S_T$, zu Null werden.

Die Systemstabilisierung (hier mit der vom Testsignal $S_G$ gesteuerten Dividierschaltung 14) erfolgt zweckmäßigerweise vor den beiden Synchron-Detektoren 8,9 für die Signale $S_R$ und $S_{TN}$. Am Ausgang der Dividierschaltung 13

0047036

steht die relative Objekttemperatur

$$\Delta \Delta T_O = T_O - T_{NO} - \Delta T_N/2 = \Delta T_O - \Delta T_N/2,$$

zur Verfügung. $\Delta T_N$ ist eine entsprechend dem gewünschten Meßbereich gewählte Systemkonstante. $T_{NO}$ kann in bekannter Weise durch ein elektrisches Thermometer gemessen werden. Die absolute Temperatur des Meßobjektes ist dann durch

$$T_O = \Delta \Delta T_O + T_{NO} + \Delta T_N/2$$

bestimmt.

Bei den angegebenen Gleichungen wurde zur Vereinfachung von einer isothermen Meßbrücke ausgegangen. Die zur Berücksichtigung von Temperaturkoeffizienten innerhalb der Meßbrücke erweiterte Rechnung zeigt, daß durch Einführung weiterer Offsetsignale das Prinzip der emissivitätsunabhängigen Messung gewahrt werden kann.

Von besonderer Bedeutung für die Praxis ist der Fall, daß das Meßobjekt nicht direkt verlustfrei mit dem Richtkoppler verbunden ist. Beispielsweise wird man bei der medizinischen Temperaturmessung das Meßobjekt hier die am Körper aufgesetzte Meßsonde (Antenne), zur bequemeren Handhabung über ein Kabel entsprechender Länge mit dem Meßsystem verbinden. Der Übertragungsfaktor $\tau$ eines solchen Kabels ist immer kleiner als "1". Selbst wenn das System nun im isothermen Zustand auf die Eingangsklemmen des Kabels als neue Bezugsebene geeicht wurde, ist in der Praxis bei Verzicht auf eine aufwendige Thermostatisierung des Kabels mit einem Meßfehler durch die Eigenstrahlung des Kabels zu rechnen. Dieser Fehler läßt sich dadurch eliminieren, daß von dem aufgrund abweichender Kabeltemperatur zuzusätzlich einzustellenden Offset beim Nullabgleich des

Signals $S_T$ (wie weiter oben beschrieben) ein Bruchteil

$$\alpha = \frac{1}{1+\tau}$$

hinter der Dividierschaltung wieder hinzugefügt wird.

Die entsprechende Schaltungsergänzung zeigt Fig.6 mit zwei zusätzlichen Summiergliedern 17,19 und einem Koeffizientenglied 18.

[1] M.I. Skolnik: Radar Handbook, Chapter 39: Passive
    Detection,  McGraw Hill, New York, 1970 (mit ausführlicher Literatur).

[2] J.D. Kraus, Radio Astronomy, McGraw Hill, New York,
    1966.

[3] Manual of remote Sensing, Band 1,2: Amer.Soc. of
    Photogrammetry, 1975, S. 516-527.

[4] J.P. Hach : A Very Sensitive Airborne Microwave
    Radiometer Using Two Reference Temperatures, IEEE
    Trans. MTT-16, No.9, Sept. 1968, S. 629-636.

[5] K.-M. Lüdeke, B. Schiek, J. Köhler: Radiation
    Balance Microwave Thermograph for Industrial and
    Medical Applications, Electronics Letters, 16th March
    1978, Vol.14, No. 6, S. 194-196.

[6] K.-M. Lüdeke, J. Köhler, J. Kanzenbach: A new
    Radiation Balance Microwave Thermograph for
    Simultaneous and Independent Temperature and
    Emissivity Measurements, 8th European Microwave
    Conference, Paris 4th-8th Sept. 1978,
    Workshop on "Diagnostics and Therapy using Micro-
    waves", 8th Sept. 1978 and 2nd European Thermographic
    Congress, Barcelona, 11th-15th Sept. 1978.
    Journal of Microwave Power, Vol. 14, No. 2, June 1979,
    S. 117-121.

[7] K.-M. Lüdeke, J. Köhler, J. Kanzenbach: A Radiation
    Balance Microwave Thermograph For Medical Applications,
    ACTA ELECTRONICA, 22,1,1979, S. 65-69.

Patentansprüche
-----------------

1.    Verfahren zur radiometrischen Messung der Rauschtemperatur von Ein-Toren im Hochfrequenz- und Mikrowellenbereich, wobei ein einer Rauschquelle entnommenes
Signal über je einen Abschwächer einmal direkt und einmal über einen Richtkoppler nach Reflektion an einem
Meßobjekt auf einen Umschalter gelangt und von diesem
dem Eingang eines Empfängers zugeführt wird, dadurch gekennzeichnet,
daß das Rauschsignal derart moduliert wird, daß aus dem
dem Empfänger entnommenen Ausgangssignal drei Teilsignale
abgeleitet werden, deren erstes der scheinbaren Objekttemperatur, deren zweites der Objektemissivität und deren
drittes einem objektunabhängigen Testsignal (Systemverstärkung) entspricht, daß das Testsignal zur Beseitigung
der Verstärkungsabhängigkeit der beiden ersten Größen verwendet wird, und daß mittels Division der scheinbaren
Objekttemperatur durch die Objektemissivität die wahre
Objekttemperatur bestimmt wird.

2.    Verfahren nach Anspruch 1, dadurch gekennzeichnet,
daß die Verstärkungsabhängigkeit dadurch beseitigt wird,
daß die die scheinbare Objekttemperatur und die Objektemissivität darstellenden Signale durch das Testsignal
dividiert werden.

3. ·  Verfahren nach Anspruch 1, dadurch gekennzeichnet,
daß die Verstärkungsabhängigkeit dadurch beseitigt wird,
daß durch Verstärkungsregelung das der Systemverstärkung
proportionale Testsignal konstantgehalten wird.

4.    Verfahren nach einem der Ansprüche 1 bis 3, dadadurch gekennzeichnet,
daß die Rauschquelle derart gesteuert wird, daß sie nur
die Zustände EIN und AUS annimmt.

5.        Verfahren nach Anspruch 4, dadurch gekennzeichnet,
daß die Rauschquelle derart gesteuert wird, daß sie nur
die Zustände 11011000 oder 00100111 (1 = EIN, 0 = AUS)
synchron zu vier Umschaltzyklen des Schalters durchläuft.

6.        Verfahren nach einem der Ansprüche 1 bis 4, dadurch
gekennzeichnet,
daß die Steuerfunktion der Rauschquelle derart beschaffen
ist, daß zwei Teilsignale in Phasenquadratur auf den
gleichen Signalfrequenzen erscheinen, daß das dritte
Teilsignal auf hiervon verschiedenen Signalfrequenzen erscheint.

7.        Verfahren nach Anspruch 6, dadurch gekennzeichnet,
daß die Rauschquelle flankensynchron mit dem Schalter,
jedoch mit halbierter Taktfrequenz eingeschaltet wird.

8.        Verfahren nach Anspruch 6, dadurch gekennzeichnet,
daß die Rauschquelle mit doppelter Frequenz (Tastverhältnis
1 : 1) flankensynchron mit dem Schalter geschaltet ist.

9.        Verfahren nach Anspruch 4, dadurch gekennzeichnet,
daß die Trennung der drei Teilsignale aus dem Gesamtsignal
durch Zeitdemultiplex erfolgt.

10.       Anordnung zur Durchführung des Verfahrens nach
Anspruch 1, enthaltend einen Rauschgenerator, dessen Ausgang über einen ersten Abschwächer mit einem ersten Eingang
eines Richtkopplers verbunden ist, dessen zweiter Eingang
mit einem Meßobjekt gekoppelt ist, enthaltend weiterhin
einen zweiten, zwischen dem Ausgang des Rauschgenerators
und einem Eingang eines Schalters liegenden Abschwächer, wobei der Ausgang des Richtkopplers an einem zweiten Eingang des Schalters liegt, dessen Ausgang mit dem Eingang
eines Empfängers verbunden ist, dadurch gekennzeichnet,
daß dem Rauschgenerator (4) ein Steuergenerator (7) vorgeschaltet ist, dessen erster Ausgang (C) sowohl mit dem
Schalter (1) als auch mit dem Steuereingang eines ersten
Synchron-Detektors (8) verbunden ist, dessen zweiter Ausgang (B) mit dem Steuereingang eines zweiten Synchron-
Detektors (9) verbunden ist, und dessen dritter Ausgang
(a) mit dem Steuereingang eines dritten Synchron-Detektors
(10) verbunden ist, und daß die Signaleingänge der Synchron-
Detektoren (8, 9, 10) am Ausgang des Empfängers (3) liegen
(Fig. 1).

11.     Anordnung nach Anspruch 10 zur Durchführung des
Verfahrens nach Anspruch 2, dadurch gekennzeichnet,
daß zwischen dem Ausgang des Empfängers (3) und die Signal-
Eingänge zweier Synchron-Detektoren (8, 9) ein Dividierer
(14) gelegt ist, dem gleichzeitig das Ausgangssignal ($S_G$)
des dritten Synchron-Detektors (10) zugeführt ist (Fig. 4).

12.     Anordnung nach Anspruch 10 zur Durchführung des
Verfahrens nach Anspruch 3, dadurch gekennzeichnet,
daß zwischen dem Ausgang des Empfängers (3) und den
Signal-Eingängen der Synchron-Detektoren (8, 9, 10) ein
steuerbarer Verstärker (15) geschaltet ist, an dessen
Steuereingang ein vom Ausgang des dritten Synchron-Detektors (10) gesteuerter Regler (16) liegt (Fig. 5).

13.     Anordnung nach einem der Ansprüche 10 bis 12, dadadurch gekennzeichnet,
daß die Ausgänge zweier Synchron-Detektoren (8, 9) mit je
einem Eingang zweier Summierschaltungen (11, 12) verbunden
sind, deren anderen Eingängen Offset-Signale zugeführt
sind, und daß die Ausgänge der Summierschaltungen (11, 12)
an den Eingängen einer Dividierschaltung (13) liegen (Fig. 3).

14.    Anordnung nach Anspruch 13, <u>dadurch gekennzeichnet,</u> daß in der Ausgangsleitung des ersten Synchron-Detektors (8) zwischen der Summierschaltung (11) und der Dividierschaltung (13) eine weitere Summierschaltung (17) angeordnet ist, der außerdem ein weiteres Offset-Signal zugeführt ist, das zugleich auch über ein Koeffizientenglied (18) auf eine weitere Summierschaltung (19) gelangt, deren anderer Eingang am Ausgang der Dividierschaltung liegt, und daß am Ausgang der weiteren Summierschaltung (19) ein der relativen Objekttemperatur proportionales Signal entnehmbar ist.

FIG.1

FIG.2

FIG.3

0047036

**FIG.4**

**FIG.5**

**FIG.6**

**0047036**

3/3

**FIG.7**

**FIG.8**